# EUROPÄISCHE PATENTSCHRIFT

(11) **EP 2 899 781 B1**
(45) Veröffentlichungstag und Bekanntmachung des Hinweises auf die Patenterteilung: **06.09.2017**
(21) Anmeldenummer: 14153680.5
(22) Anmeldetag: 03.02.2014
(51) Int. Cl.: H01M 4/04, H01M 4/76, H01M 4/20

(54) **Vorrichtung zum Befüllen von Röhrchen einer positiven Plattenelektrode eines Bleiakkumulators mit pastöser aktiver Masse**
Device for filling tubes of a positive electrode plate of a lead accumulator with a pasty active mass
Dispositif de remplissage de petits tubes d'une électrode plane positive d'un accumulateur au plomb avec une masse active pâteuse

(30) Priorität: 28.01.2014 DE 102014100980
(43) Veröffentlichungstag der Anmeldung: 29.07.2015
(73) Patentinhaber: FXM Batterie Manufaktur GmbH, 84424 Isen (DE)
(72) Erfinder: Mittermaier, Franz Xaver, 84424 Isen (DE)
(74) Vertreter: Kotitschke, Ralf Thomas

(56) Entgegenhaltungen:
- EP-A1- 0 075 264
- DE-A1-102009 046 640
- GB-A- 1 576 115
- US-A- 3 949 793

## Beschreibung

Die vorliegende Erfindung betrifft eine Vorrichtung zum Befüllen von Röhrchen einer positiven Plattenelektrode eines Bleiakkumulators mit pastöser aktiver Masse.

Eine derartige Vorrichtung ist beispielsweise in DE 29 36 025 C2 beschrieben. Bei dieser Vorrichtung wird pastöse aktive Masse, d.h. eine Masse aus Bleipulver (Pb-Pulver), Wasser (H₂O) und Schwefelsäure (H₂SO₄), mithilfe einer Druckkolbenpumpe in ein Füllsammelrohr (hier die Druckkammer der Druckkolbenpumpe) eingebracht und aus mehreren, in einer Ebene und parallel zueinander angeordneten Füllrohren, die seitlich von dem Füllsammelrohr abstehen, gepresst. Die Röhrchen der Plattenelektrode, die ebenfalls in einer Ebene und parallel zueinander angeordnet, sind dabei mit Gleitsitz auf die Füllrohre aufgeschoben. Nach Erreichen eines bestimmten Fülldruckes werden die meist aus einem Textilmaterial hergestellten Röhrchen von den Füllrohren langsam abgezogen, während gleichzeitig weiter pastöse aktive Masse aus den Füllrohren ausgebracht und in die Geweberöhrchen solange gepresst wird, bis die Geweberöhrchen einen vorbestimmten Füllgrad mit aktiver Masse erreicht haben.

Weitere Vorrichtungen zum Befüllen von Röhrchen einer positiven Plattenelektrode eines Bleiakkumulators mit pastöser aktiver Masse sind in der US 3 949 793 A und der DE 10 2009 046640 A1 offenbart. In der Praxis kann es aufgrund örtlicher Gegebenheiten sowie aufgrund der an eine solche Füllanlage gestellten Flexibilität notwendig sein, dass die Druckkolbenpumpe über eine relativ lange Rohrleitung mit dem Füllsammelrohr, das der Druckkammer in DE 29 36 025 C2 entspricht, verbunden wird. Ist die die Druckkolbenpumpe mit dem Füllsammelrohr verbindende Rohrleitung relativ lang, kann es zu einem Druckgradienten innerhalb des Füllsammelrohres kommen, der zu einer ungleichmäßigen Beaufschlagung der Füllrohre mit aktiver Masse führt. Ist der Druck innerhalb des Füllsammelrohrs in Längsrichtung, d.h. in der Richtung, in der die Füllrohre angeordnet sind und seitlich von dem Füllsammelrohr abstehen, nicht konstant, kann es vorkommen, dass der Füllgrad und somit die Dichte der aktiven Masse in den Geweberöhrchen einer gewissen Fluktuation unterliegt, und es somit zu einer Qualitätseinbuße und einer verminderten spezifischen Leistungsfähigkeit der gesamten Plattenelektrode kommt.

Aufgabe der vorliegenden Erfindung ist es, diesen Nachteil des Standes der Technik zumindest zu minimieren oder gar zu beseitigen. Diese Aufgabe wird durch die Merkmale des Patentanspruches 1 gelöst. Bevorzugte bzw. optionale Merkmale der vorliegenden Erfindung sind Gegenstand der abhängigen Patentansprüche 2 bis 11.

Erfindungsgemäß wird eine Vorrichtung zum Befüllen von Röhrchen einer positiven Plattenelektrode eines Bleiakkumulators mit pastöser aktiver Masse vorgesehen, die eine erste Fördereinrichtung mit einem Auslass für die aktive Masse, ein Füllsammelrohr, das fluidmäßig mit dem Auslass der Fördereinrichtung verbunden ist, und eine Vielzahl von Füllrohren, die von dem Füllsammelrohr abstehen und jeweils so angeordnet und ausgebildet sind, dass jeweils ein Röhrchen mit Gleitsitz auf eines der Füllrohre aufschiebbar ist, umfasst. Des Weiteren ist erfindungsgemäß zwischen der ersten Fördereinrichtung und dem Füllsammelrohr mindestens eine zweite Fördereinrichtung zwischengeschaltet.

Bevorzugt erstreckt sich die Vielzahl von Füllrohren senkrecht zur Längsrichtung des Füllsammelrohres.

Weiterhin bevorzugt ist mindestens ein längsseitiges Ende des Füllsammelrohrs mit der zweiten Fördereinrichtung fluidmäßig verbunden.

Nach einer bevorzugten Ausgestaltung der Erfindung sind beide längsseitigen Enden des Füllsammelrohrs mit der zweiten Fördereinrichtung fluidmäßig verbunden.

Es kann auch vorteilhaft sein, wenn bevorzugt beide längsseitigen Enden des Füllsammelrohrs mit jeweils einer zweiten Fördereinrichtung fluidmäßig verbunden sind.

Vorzugsweise ist die zweite Fördereinrichtung direkt an dem Füllsammelrohr angeflanscht.

Nach einer weiteren bevorzugten Ausführungsform der Erfindung ist die zweite Fördereinrichtung mit mindestens einer Öffnung in der Rohrwand des Füllsammelrohrs fluidmäßig verbunden.

Vorzugsweise sind mehrere zweite Fördereinrichtungen vorgesehen, die jeweils mit einer in der Rohrwand des Füllsammelrohrs vorgesehenen Öffnung fluidmäßig verbunden sind.

Weiterhin bevorzugt ist die erste Fördereinrichtung eine Druckkolbenpumpe oder eine Exzenterschneckenpumpe.

Ebenso bevorzugt ist die zweite Fördereinrichtung eine Druckkolbenpumpe oder eine Exzenterschneckenpumpe.

Gemäß einer weiteren bevorzugten Ausführungsform der Erfindung ist die zweite Fördereinrichtung getrennt von der ersten Fördereinrichtung steuerbar.

Vorzugsweise sind mehrere zweite Fördereinrichtungen getrennt voneinander steuerbar.

Vorzugsweise kann mit Hilfe der Vorrichtung eine pastöse aktive Masse mit einer Penetration von 20 gleichmäßig in sämtliche Röhrchen eingebracht werden.

Weiterhin bevorzugt ist die erste Fördereinrichtung mit einem Vorratsbehälter für die pastöse aktive Masse verbunden.

Die Erfindung wird nun rein beispielhaft anhand der beigefügten Figuren im Detail beschrieben. Von den Figuren zeigen:
Fig. 1 eine bevorzugte Ausführungsform der Erfindung, und
Fig. 2 eine weitere bevorzugte Ausführungsform der Erfindung.

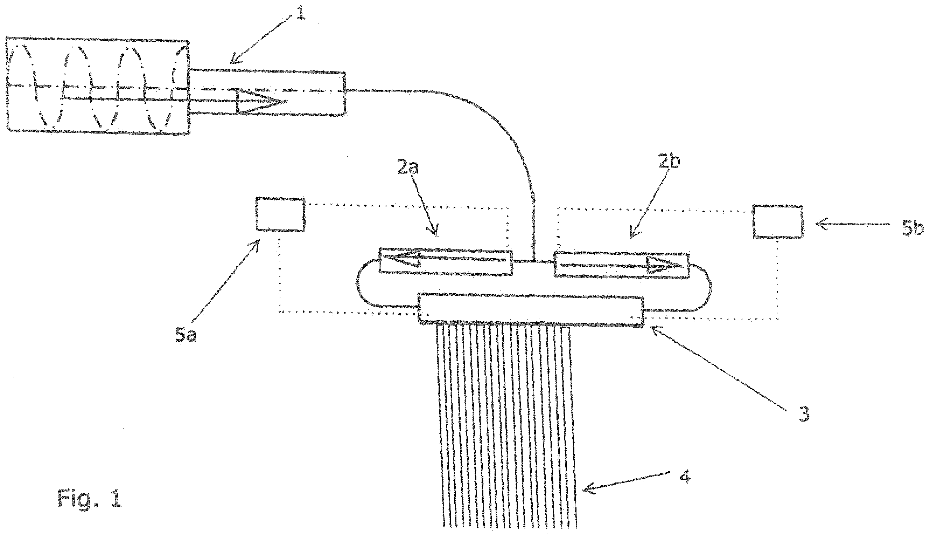

In der Figur 1 ist eine Vorrichtung zum Befüllen von Röhrchen einer positiven Plattenelektrode eines Bleiakkumulators (nicht gezeigt) mit pastöser aktiver Masse gemäß einer bevorzugten Ausführungsform der Erfindung gezeigt. Die Vorrichtung umfasst eine erste Fördereinrichtung 1, bevorzugt eine Exzenterschneckenpumpe oder Druckkolbenpumpe, deren Auslass über eine Rohrleitung fluidmäßig mit den beiden längsseitigen Enden eines axialen Füllsammelrohrs 3 verbunden ist. Axial in diesem Zusammenhang bedeutet, dass die pastöse aktive Masse axial dem Füllsammelrohr 3 zugeführt wird. In dem hier gezeigten Ausführungsbeispiel stehen eine Vielzahl von Füllrohren 4 vorzugsweise seitlich und senkrecht von dem Füllsammelrohr 3 ab. Die Erfindung ist nicht auf eine bestimmte Anzahl von Füllrohren 4 beschränkt. Vielmehr hängt die Anzahl der Füllrohre 4 von der Anzahl der zu befüllenden Röhrchen der positiven Plattenelektrode des Bleiakkumulators ab. Die Füllrohre 4 sind vorzugsweise in einer Ebene, äquidistant und parallel zueinander angeordnet.

Zwischen dem Füllsammelrohr 3 und dem Auslass der ersten Fördereinrichtung 1 ist mindestens eine weitere zweite Fördereinrichtung 2a, 2b zwischengeschaltet. In dem hier dargestellten Ausführungsbeispiel ist diese zweite Fördereinrichtung 2a, 2b vorzugsweise als Exzenterschneckenpumpe oder als Druckkolbenpumpe ausgebildet.

Vorzugsweise sind beide längsseitigen Enden des Füllsammelrohres 3 mit jeweils einer zweiten Fördereinrichtung 2a, 2b fluidmäßig verbunden. Es ist allerdings auch denkbar, dass lediglich ein längsseitiges Ende des Füllsammelrohrs 3 mit nur einer zweiten Fördereinrichtung 2a verbunden ist und das andere gegenüberliegende längsseitige Ende des Füllsammelrohrs 3 verschlossen ist. Ebenso ist es möglich, den Ausgang einer zweiten Fördereinrichtung 2a mit einem T-Stück zu verbinden und die von dieser zweiten Fördereinrichtung 2a geförderte, pastöse aktive Masse in beide längsseitigen Enden des Füllsammelrohrs 3 einzubringen.

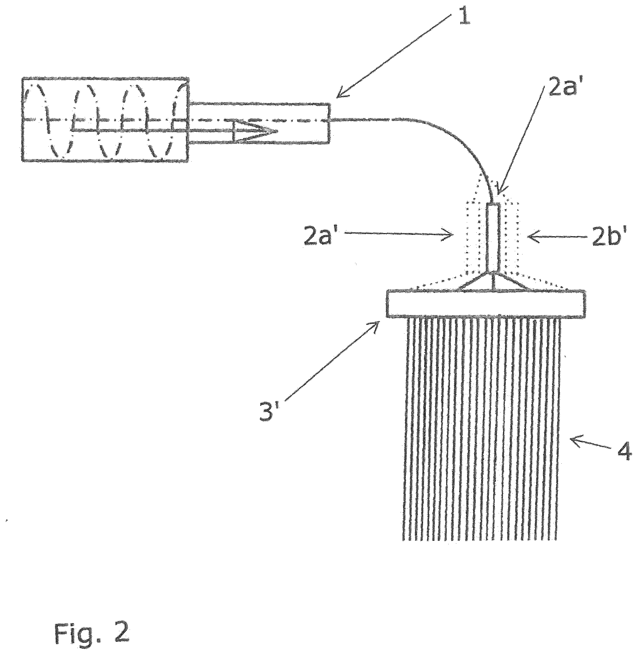

Figur 2 zeigt eine Vorrichtung gemäß einer weiteren bevorzugten Ausführungsform der Erfindung. Bezugszeichen, die identisch mit den Bezugszeichen in der Figur 1 sind, deuten auf identische bzw. funktionsgleiche oder nahezu identische bzw. funktionsähnliche Komponenten der Vorrichtung hin.

Bei diesem Ausführungsbeispiel sind nicht die längsseitigen Enden des Füllsammelrohres mit einer oder mehreren, parallel geschalteten zweiten Fördereinrichtungen verbunden. Vielmehr sind bei dieser Ausführungsform Öffnungen in der Rohrwand des radialen Füllsammelrohres 3' vorgesehen, die fluidmäßig mit einer 2a' oder mehreren 2a', 2b' (siehe punktierte Darstellung in der Figur 2) zweiten Fördereinrichtungen fluidmäßig verbunden sind. Radial in diesem Zusammenhang bedeutet, dass die pastöse aktive Masse radial durch die Öffnungen dem Füllsammelrohr 3' zugeführt wird. Die Öffnungen sind vorzugsweise entlang einer Linie angeordnet, die parallel zur Längsachse des Füllsammelrohres 3' verläuft. Je nach Anzahl der Füllrohre 4, d.h. abhängig von deren Erstreckung in Längsrichtung des Füllsammelrohres 3', sind die Öffnungen vorzugsweise über die gleiche Längserstreckung in der Rohrwand des Füllsammelrohres 3' angeordnet. Die übrigen Komponenten, wie z.B. die erste Fördereinrichtung 1 und die Füllrohre 4 sind wie in der Ausführungsform der Figur 1 ausgebildet.

Die Vorteile der vorliegenden Erfindung sind Folgende.

Viskositäten werden häufig mit einem Penetrometer gemessen. Bei der Messung wird ein kegelstumpfförmiger Gegenstand manuell auf die zu messende Substanz gesetzt. Von dem kegelstumpfförmigen Gegenstand erstreckt sich ein länglicher Schaft, der als Führung für ein entlang des Schaftes beweglich angeordnetes Gewicht dient. Das Gewicht wird nun aus vorbestimmter Höhe entlang des Schaftes auf den kegelstumpfförmigen Gegenstand fallengelassen, wodurch dieser in die zu messende Substanz eindringt. Im Bereich der Spitze des Kegelstumpfs sind Ringe angegeben, welche die Penetration, das heißt die Eindringtiefe des Kegelstumpfs in die Substanz anzeigen. Je geringer die Penetration ist, desto viskoser ist die Substanz.

Mit Hilfe der hier beschriebenen Vorrichtung können aktive Massen mit einer Penetration in einem Bereich von ca. 20-22, insbesondere 22 in Röhrchen eingefüllt werden. Bei der Bestimmung dieser Penetration beträgt das Gewicht des Fallkörpers 300g und das des kegelstumpfförmigen Eindringkörpers 175g. Die Fallhöhe ist 67mm. Der Kegelstumpf hat einen oberen Durchmesser von 20mm und einen unteren Durchmesser von 9mm an der Eindringseite. Die Höhe des Kegelstumpfes beträgt 113mm. Der Kegelwinkel (2ϕ) beträgt ca. 5,6°. Die Temperatur, auf die sich die voranstehend erwähnte Penetration bezieht, ist ca. 50°C.

Wird die erste Fördereinrichtung 1, das heißt die erste Exzenterschneckenpumpe 1 über eine relativ lange Rohrleitung mit dem Füllsammelrohr 3, 3' verbunden, muss die Pumpe 1 mit sehr hoher Druckleistung betrieben werden, um längs des Füllsammelrohrs 3, 3' einen Druckgradienten zu vermeiden, der sonst zu einer ungleichmäßigen Befüllung der Geweberöhrchen führen würde. Um dieses Problem zu vermeiden, haben verschiedene Hersteller von Bleiakkumulatoren die Viskosität der aktiven Masse einfach verringert (Penetration 58). Der Erfinder der vorliegenden Erfindung hat allerdings herausgefunden, dass die aktive Masse, die in pastöser Form in die Geweberöhrchen eingebracht wird, eine möglichst hohe Viskosität aufweisen sollte. Denn eine Verringerung der Viskosität hat einerseits einen relativ hohen Materialaustritt aus den Geweberöhrchen und im Anschluss eine zeitaufwendige Waschprozedur, und andererseits eine inhomogene Füllung der Geweberöhrchen zur Folge. Um bei hoher Viskosität (Penetration 20-22) eine gleichmäßige Druckverteilung innerhalb des Füllsammelrohrs 3, 3' sicherstellen zu können, wird gemäß der Erfindung mindestens eine weitere Fördereinrichtung 2a, 2b, 2a', 2b' zwischen der ersten Fördereinrichtung 1 und dem Füllsammelrohr 3, 3' zwischengeschaltet.

Mit der vorliegenden Erfindung können hochviskose (Penetration 20-22) aktive Massen in die Geweberöhrchen eingebracht werden. Dadurch ist der Füllgrad in sämtlichen Geweberöhrchen einheitlich, was zu einer hohen spezifischen Leistungsfähigkeit, niedrigen Innenwiderständen und einer extrem langen Lebensdauer der positiven Plattenelektrode führt. Ebenso wird nahezu die gleiche Menge an aktiver Masse in jedes Geweberöhrchen eingebracht, was zu einer gleichmäßigen Beanspruchung der aktiven Masse in sämtlichen Geweberöhrchen führt. Dadurch, dass aktive Massen mit relativ niedrigem Feuchtigkeitsgehalt abgefüllt werden können, erhält man eine dichte Kontaktierung mit den zentral in den Geweberöhrchen geführten Bleiseelen der Elektroden. Dadurch werden die einzelnen Röhrchenelektroden sowohl untereinander als auch in der Längsrichtung gleichmäßig beansprucht. Durch die intensive Kontaktierung zur Bleiseele wird dieselbe nicht zerformiert und verformt, so dass eine Expandierung der Bleiseele über die gesamte Lebensdauer des Bleiakkumulators vermieden wird. Hieraus werden eventuell auftretende Verformungen des Deckels des Bleiakkumulators durch expandierte Bleiseelen vermieden, wodurch auch eine fehlerfreie Funktion der Wassernachfüllventile im Deckel des Bleiakkumulatorgehäuses gewährleistet ist. Durch die gleichmäßige Befüllung und dadurch bedingt eine gleichmäßige Dichte in den Geweberöhrchen untereinander werden auch sog. Säureschichtungen vermieden.

Durch die zweite Fördereinrichtung 2a, 2b, 2a', 2b' wird ein definierter Fülldruck unmittelbar am Füllende, vorzugsweise an beiden Füllenden des Füllsammelrohres 3 (Figur 1) oder entlang der Längserstreckung der in der Rohrwand des Füllsammelrohres 3' vorgesehenen Öffnungen (Figur 2) erzeugt. Dadurch wird von beiden Seiten des Füllsammelrohres 3 (Figur 1) oder über die Längserstreckung der Öffnungen (Figur 2) ein definierbarer Druck im Innern des Füllsammelrohrs 3, 3' erzeugt, der zudem über vorzugsweise zwei Pumpensteuerungen 5a, 5b (die Pumpensteuerungen sind in Figur 2 nicht gezeigt) steuerbar ist. Mit in den Figuren nicht gezeigten Druckmesssensoren kann dieser Druck erfasst werden und abhängig von diesem Druck können die zweiten Fördereinrichtungen 2a, 2b, 2a', 2b' geregelt werden. Bei beiden Ausführungsformen können die jeweils vorgesehenen zweiten Fördereinrichtungen 2a, 2b, 2a', 2b' unabhängig voneinander gesteuert und der von ihnen erzeugte Fülldruck über Drucksensoren erfasst werden.

## Patentansprüche

1. Vorrichtung zum Befüllen von Röhrchen einer positiven Plattenelektrode eines Bleiakkumulators mit pastöser aktiver Masse, umfassend:
eine erste Fördereinrichtung (1) mit einem Auslass für die aktive Masse,
ein Füllsammelrohr (3, 3'), das fluidmäßig mit dem Auslass der Fördereinrichtung (1) verbunden ist, und
eine Vielzahl von Füllrohren (4), die von dem Füllsammelrohr (3, 3') abstehen und jeweils so angeordnet und ausgebildet sind, dass jeweils ein Röhrchen mit Gleitsitz auf eines der Füllrohre (4) aufschiebbar ist,
**dadurch gekennzeichnet, dass** zwischen der ersten Fördereinrichtung (1) und dem Füllsammelrohr (3, 3') mindestens eine zweite Fördereinrichtung (2a, 2b; 2a', 2b') zwischengeschaltet ist, die beim bestimmungsgemäßen Betrieb der Vorrichtung einen definierten Fülldruck an mindestens einem Füllende des Füllsammelrohres (3) oder entlang der Längserstreckung des Füllsammenrohres (3') erzeugt.

2. Vorrichtung nach Anspruch 1, **dadurch gekennzeichnet, dass** die Vielzahl von Füllrohren (4) sich senkrecht zur Längsrichtung des Füllsammelrohres (3, 3') erstrecken.

3. Vorrichtung nach Anspruch 1 oder 2, **dadurch gekennzeichnet, dass** mindestens ein längsseitiges Ende des Füllsammelrohrs (3, 3') mit der zweiten Fördereinrichtung (2a, 2b) fluidmäßig verbunden ist.

4. Vorrichtung nach einem der vorhergehenden Ansprüche, **dadurch gekennzeichnet, dass** beide längsseitigen Enden des Füllsammelrohrs (3, 3') mit der zweiten Fördereinrichtung (2a, 2b) fluidmäßig verbunden sind.

5. Vorrichtung nach einem der vorhergehenden Ansprüche, **dadurch gekennzeichnet, dass** beide längsseitigen Enden des Füllsammelrohrs (3, 3') mit jeweils einer zweiten Fördereinrichtung (2a, 2b) fluidmäßig verbunden sind.

6. Vorrichtung nach einem der vorhergehenden Ansprüche, **dadurch gekennzeichnet, dass** die zweite Fördereinrichtung (2a, 2b) direkt an einem oder beiden längsseitigen Enden des Füllsammelrohrs (3, 3') angeflanscht ist.

7. Vorrichtung nach Anspruch 1 oder 2, **dadurch gekennzeichnet, dass** die zweite Fördereinrichtung (2a') mit mindestens einer Öffnung in der Rohrwand des Füllsammelrohrs (3') fluidmäßig verbunden ist.

8. Vorrichtung nach Anspruch 7, **dadurch gekennzeichnet, dass** mehrere zweite Fördereinrichtungen (2a') vorgesehen sind, die jeweils mit einer in der Rohrwand des Füllsammelrohrs (3') vorgesehenen Öffnung fluidmäßig verbunden sind.

9. Vorrichtung nach einem der vorhergehenden Ansprüche, **dadurch gekennzeichnet, dass** die erste Fördereinrichtung (1) eine Druckkolbenpumpe oder eine Exzenterschneckenpumpe ist.

10. Vorrichtung nach einem der vorhergehenden Ansprüche, **dadurch gekennzeichnet, dass** die zweite Fördereinrichtung (2a, 2b; 2a', 2b') eine Druckkolbenpumpe oder eine Exzenterschneckenpumpe ist.

11. Vorrichtung nach einem der vorhergehenden Ansprüche, **dadurch gekennzeichnet, dass** die zweite Fördereinrichtung (2a, 2b; 2a', 2b') getrennt von der ersten Fördereinrichtung (1) steuerbar ist.

12. Vorrichtung nach einem der vorhergehenden Ansprüche, **dadurch gekennzeichnet, dass** mehrere zweite Fördereinrichtungen (2a, 2b; 2a', 2b') getrennt voneinander steuerbar sind.

13. Vorrichtung nach einem der vorhergehenden Ansprüche, mit Hilfe derer eine pastöse aktive Masse mit einer Penetration von 20 gleichmäßig in sämtliche Röhrchen eingebracht werden kann. Bei der Bestimmung dieser Penetration, die ein Maß für die Viskosität der aktiven Masse ist, mit einem Penetrometer beträgt das Gewicht des Fallkörpers 300 g und das des kegelstumpfförmigen Eindringkörpers 175 g. Die Fallhöhe ist 67 mm. Der Kegelstumpf hat einen oberen Durchmesser von 20 mm und einen unteren Durchmesser von 9 mm an der Eindringseite. Die Höhe des Kegelstumpfes beträgt 113 mm. Der Kegelwinkel (2(p) beträgt ca. 5,6°. Die Temperatur, auf die sich die voranstehend erwähnte Penetration bezieht, ist ca. 50 °C.

14. Vorrichtung nach einem der vorhergehenden Ansprüche, **dadurch gekennzeichnet, dass** die erste Fördereinrichtung (1) mit einem Vorratsbehälter für die pastöse aktive Masse verbunden ist.

## Claims

1. Apparatus for filling capillary tubes of a positive plate electrode of a lead accumulator with pasty active mass, comprising: a first conveying device (1) having an outlet for the active mass, a filling collector tube (3, 3') that is fluidly connected to the outlet of the conveying device (1), and a plurality of filling tubes (4) which protrude from the filling collector tube (3, 3') and are respectively arranged and configured in such a way that a capillary tube can be slid onto one of the filling tubes (4) with a sliding fit,
**characterized in that** at least one second conveying device (2a, 2b; 2a', 2b') is interposed between the first conveying device (1) and the filling collector tube (3, 3'), the second filling device (2a, 2b; 2a', 2b'), when operated according to intended use, producing a defined filling pressure at at least one filling end of the filling collector tube (3) or along the longitudinal extension of the filling collector tube (3').

2. Device according to claim 1, **characterized in that** the plurality of filling tubes (4) extend perpendicularly with respect to the longitudinal direction of the filling collector tube (3, 3').

3. Device according to claim 1 or 2, **characterized in that** at least one longitudinal side end of the filling collector tube (3, 3') is fluidly connected to the second conveying device (2a, 2b).

4. Device according to one of the preceding claims, **characterized in that** both longitudinal side ends of the filling collector tube (3, 3') are fluidly connected to the second conveying device (2a, 2b).

5. Device according to one of the preceding claims, **characterized in that** both longitudinal side ends of the filling collector tube (3, 3') are fluidly connected to a respective second conveying device (2a, 2b).

6. Device according to one of the preceding claims, **characterized in that** the second conveying device (2a, 2b) is flange mounted directly on one or both longitudinal side ends of the filling collector tube (3, 3').

7. Device according to claim 1 or 2, **characterized in that** the second conveying device (2a') is fluidly connected to at least one opening in the tube wall of the filling collector pipe (3').

8. Device according to claim 7, **characterized in that** a plurality of second conveying devices (2a') are provided which are each fluidically connected to an opening provided in the tube wall of the filling collector tube (3').

9. Device according to one of the preceding claims, **characterized in that** the first conveying device (1) is a pressure piston pump or a progressive cavity pump.

10. Device according to one of the preceding claims, **characterized in that** the second conveying device (2a, 2b; 2a', 2b') is a pressure piston pump or a progressive cavity pump.

11. Device according to one of the preceding claims, **characterized in that** the second conveying device (2a, 2b; 2a', 2b') is controllable separately from the first conveying device (1).

12. Device according to one of the preceding claims, **characterized in that** a plurality of second conveying devices (2a, 2b; 2a', 2b') are controllable separately from one another.

13. Device according to one of the preceding claims, by means of which a pasty active mass with a penetration of 20 can be uniformly introduced into all the capillary tubes. In determining this penetration, which is a measure of the viscosity of the active mass, with a penetrometer, the weight of the dropping body is 300 g and that of the truncated conical penetration body is 175 g. The drop height is 67 mm. The truncated cone has an upper diameter of 20 mm and a lower diameter of 9 mm at the penetration side. The height of the truncated cone is 113 mm. The cone angle (2(p) is about 5.6°. The temperature to which the above-mentioned penetration refers is about 50 °C.

14. Device according to one of the preceding claims, **characterized in that** the first conveying device (1) is connected to a storage container for the pasty active mass.

## Revendications

1. Dispositif servant à remplir des petits tubes d'une électrode plate positive d'un accumulateur au plomb avec une masse active pâteuse, comprenant :
un premier système de convoyage (1) pourvu d'une sortie pour la masse active,
un tube collecteur de remplissage (3, 3'), qui est relié en communication de fluide à la sortie du système de convoyage (1), et
une pluralité de tubes de remplissage (4), qui dépassent du tube collecteur de remplissage (3, 3') et qui sont disposés et réalisés de telle sorte que respectivement un petit tube peut être enfilé avec un ajustement glissant sur l'un des tubes de remplissage (4),
**caractérisé en ce qu'**est intercalé entre le premier système de convoyage (1) et le tube collecteur de remplissage (3, 3') au moins un deuxième système de convoyage (2a, 2b ; 2a', 2b'), qui produit, lors du fonctionnement conforme à l'usage du dispositif, une pression de remplissage définie au niveau d'au moins une extrémité de remplissage du tube collecteur de remplissage (3) ou le long de l'extension longitudinale du tube collecteur de remplissage (3').

2. Dispositif selon la revendication 1, **caractérisé en ce que** la pluralité de tubes de remplissage (4) s'étendent de manière perpendiculaire par rapport à la direction longitudinale du tube collecteur de remplissage (3, 3').

3. Dispositif selon la revendication 1 ou 2, **caractérisé en ce qu'**au moins une extrémité située côté longitudinal du tube collecteur de remplissage (3, 3') est reliée en communication de fluide au deuxième système de convoyage (2a, 2b).

4. Dispositif selon l'une quelconque des revendications précédentes, **caractérisé en ce que** les deux extrémités situées côté longitudinal du tube collecteur de remplissage (3, 3') sont reliées en communication de fluide au deuxième système de convoyage (2a, 2b).

5. Dispositif selon l'une quelconque des revendications précédentes, **caractérisé en ce que** les deux extrémités situées côté longitudinal du tube collecteur de remplissage (3, 3') sont reliées en communication de fluide à respectivement un deuxième système de convoyage (2a, 2b).

6. Dispositif selon l'une quelconque des revendications précédentes, **caractérisé en ce que** le deuxième système de convoyage (2a, 2b) est bridé directement au niveau d'une ou des deux extrémités situées côté longitudinal du tube collecteur de remplissage (3, 3').

7. Dispositif selon la revendication 1 ou 2, **caractérisé en ce que** le deuxième système de convoyage (2a') est relié en communication de fluide à au moins une ouverture dans la paroi de tube du tube collecteur de remplissage (3').

8. Dispositif selon la revendication 7, **caractérisé en ce que** plusieurs deuxièmes systèmes de convoyage (2a') sont prévus, lesquels sont reliés en communication de fluide respectivement à une ouverture prévue dans la paroi de tube du tube collecteur de remplissage (3').

9. Dispositif selon l'une quelconque des revendications précédentes, **caractérisé en ce que** le premier système de convoyage (1) est une pompe à piston de pression ou une pompe à vis excentrique.

10. Dispositif selon l'une quelconque des revendications précédentes, **caractérisé en ce que** le deuxième système de convoyage (2a, 2b ; 2a', 2b') est une pompe à piston de pression ou une pompe à vis excentrique.

11. Dispositif selon l'une quelconque des revendications précédentes, **caractérisé en ce que** le deuxième système de convoyage (2a, 2b ; 2a', 2b') peut être commandé séparément du premier système de convoyage (1).

12. Dispositif selon l'une quelconque des revendications précédentes, **caractérisé en ce que** plusieurs deuxièmes systèmes de convoyage (2a, 2b ; 2a', 2b') peuvent être commandés séparément les uns des autres.

13. Dispositif selon l'une quelconque des revendications précédentes, à l'aide duquel une masse active pâteuse peut être introduite avec une pénétration de 20 de manière homogène dans tous les petits tubes. Lors de la définition de ladite pénétration, qui est une mesure de la viscosité de la masse active, avec un pénétromètre, le poids du corps tombant est de 300 g et celui du corps pénétrant en forme de cône tronqué est de 175 g. La hauteur de chute est de 67 mm. Le cône tronqué comprend un diamètre supérieur de 20 mm et un diamètre inférieur de 9 mm au niveau du côté de pénétration. La hauteur du cône tronqué est de 113 mm. L'angle de cône (2(p) est d'environ 5,6°. La température, à laquelle se rapporte la pénétration mentionnée plus haut, est d'environ 50 °C.

14. Dispositif selon l'une quelconque des revendications précédentes, **caractérisé en ce que** le premier système de convoyage (1) est relié à un réservoir pour la masse active pâteuse.
